# EUROPÄISCHE PATENTANMELDUNG

(11) **EP 2 390 922 A2**
(43) Veröffentlichungstag der Anmeldung: **30.11.2011**
(21) Anmeldenummer: 11167078.2
(22) Anmeldetag: 23.05.2011
(51) Int. Cl.: H01L 31/042, F24J 2/52

(54) **Montageprofil für Photovoltaikelemente und Montageanordnung**

(30) Priorität: 25.05.2010 DE 202010005491 U
(71) Anmelder: SCHÜCO International KG, 33609 Bielefeld (DE)
(72) Erfinder: Blümel, Volker, 32791 Lage-Kachtenhausen (DE)
(74) Vertreter: Dantz, Jan Henning

(57) **Zusammenfassung**

Ein Montageprofil (2, 2') für Photovoltaikelemente (1), mit einer Hohlkammer (3), in die mindestens eine Armierung (4) oder ein Verbindungselement (41, 48) einfügbar ist und eine außerhalb der Hohlkammer (3) angeordneten Aufnahme (9), für den Rand eines plattenförmigen Photovoltaikelementes (1), wobei die Aufnahme (9) winkelförmig ausgebildet ist und eine Abstützung (10, 11) an einer Unterseite des Photovoltaikelementes (1) ausbildet, dadurch gekennzeichnet, dass in der Hohlkammer (3) nach innen hervorstehende Stege (5, 6, 42, 42') zur Lagefixierung der Armierung (4) ausgebildet sind und das Montageprofil (2, 2') auf der zum Photovoltaikelement (1) abgewandten Seite einen gerundeten und/ oder zur Ebene des Photovoltaikelementes (1) geneigt angeordneten Wandabschnitt (60) aufweist.

## Beschreibung

Die vorliegende Erfindung betrifft ein Montageprofil für Photovoltaikelemente sowie eine Montageanordnung.

Zur Festlegung von plattenförmigen Photovoltaikelementen sind Rahmenprofile bekannt, die umlaufend aneinander festgelegt werden und dann an einem Untergrund oder auf weiteren Profilen montiert werden. Die Herstellung solcher Rahmen ist vergleichsweise aufwändig.

Weiterhin sind Unterkonstruktionen für Photovoltaikelemente bekannt, die das Photovoltaikelement an der Unterseite abstützen und meist aufgeklebt sind. Diese Unterkonstruktionen müssen dann an weiteren Bauteilen montiert werden.

Nachteilig bei den vorbekannten Montageprofilen ist, dass diese schlecht freitragend montiert werden können und somit in regelmäßigen Abständen bodenseitig abgestützt werden müssen. Gerade für den Einsatz an Gebäuden, beispielsweise als Sonnenschutzvorrichtung, wie in Form von Lamellen, oder Vordach, besteht allerdings der Bedarf, dass auch größere plattenförmige Elemente ohne bodenseitige Abstützung montiert werden können.

Es ist daher Aufgabe der vorliegenden Erfindung, ein Montageprofil für Photovoltaikelemente und eine Montageanordnung zu schaffen, die auf einfache

Weise eine stabile Abstützung gewährleisten und auch über größere Längen freitragend montiert werden können.

Diese Aufgabe wird mit einem Montageprofil mit den Merkmalen des Anspruches 1 sowie einer Montageanordnung mit den Merkmalen des Anspruches 8 gelöst.

Erfindungsgemäß umfasst das Montageprofil eine Hohlkammer, in die mindestens eine Armierung oder ein Verbindungselement einfügbar ist, und eine außerhalb der Hohlkammer angeordnete Aufnahme für den Rand eines plattenförmigen Photovoltaikelementes, wobei die Aufnahme winkelförmig ausgebildet ist und eine Abstützung an einer Unterseite und einer Stirnseite des Photovoltaikelementes ausbildet. Dadurch kann durch das Montageprofil auf einfache Weise ein Photovoltaikelement oder ein anderes plattenförmiges Bauteil festgelegt werden, wobei das Montageprofil auch über größere Längen ohne Abstützung freitragend montiert werden kann, beispielsweise über eine Länge von mehr als 2 m, was gerade für Anwendungsfälle als Lamelle eines Sonnenschutzes oder als Vordach vorteilhaft ist. Durch die Armierung wird das dünnwandige Montageprofil verstärkt und kann die auftretenden Gewichtslasten und andere Belastungen an dem plattenförmigen Photovoltaikelement aufnehmen. Zudem kann das Photovoltaikelement mit nur zwei Montageprofilen an einem Bauwerk festgelegt werden.

Ferner sind in die Hohlkammer hervorstehende Stege zur Lagefixierung der Armierung ausgebildet. Dadurch kann die Armierung mit wenig Reibfläche besonders passgenau und trotzdem leicht montiert werden, um eine stabile Abstützung zu erhalten. Das Montageprofil weist dabei auf der zum Photovoltaikelement abgewandten Seite einen gerundeten und/ oder zur Ebene des Photovoltaikelementes geneigt angeordneten Wandabschnitt auf. Durch die Stege in der Hohlkammer kann die Außenkontur des Montageprofils auch optisch ansprechend gestaltet werden, was gerade bei Sonnenschutzlamellen und Vordächern einen wichtigen Aspekt bedeutet. Es ergibt eine große Designvielfalt, insbesondere wenn keine rechteckförmigen Rahmenprofile eingesetzt werden.

Für eine einfache Montage des Montageprofils ist in der Hohlkammer mindestens ein in Längsrichtung des Montageprofils verlaufender Schraubkanal ausgebildet, der beispielsweise durch eine extrudierte Innenprofilierung gebildet ist. Vorzugsweise ist der Schraubkanal auf der gegenüber zur Seitenwand liegenden Seite durch einen Längsschlitz offen ausgebildet. Dadurch kann der Schraubkanal sowohl an den Stirnseiten zur Befestigung einer Schraube genutzt werden, als auch von einer Seitenwand, wenn die Schraube durch den Längsschlitz durch den Schraubkanal durchgeführt wird. Hierfür kann an der Außenseite des Montageprofils eine Markierung, beispielsweise eine Kennzeichnung in Längsrichtung des Montageprofils, angeordnet sein, damit von außen eine Positionierung des Befestigungsmittels erleichtert wird. Der Benutzer kann dann an der Markierung ein Befestigungsmittel im Wesentlichen senkrecht zur Wand des Montageprofils eindrehen.

Vorzugsweise ist am Außenumfang des Montageprofils ein Kabelkanal für die Aufnahme mindestens einer Leitung ausgebildet, wodurch die Montage und der Anschluss der Photovoltaikelemente vereinfacht werden. Dadurch können elektrische Leitungen zur Verkabelung einzelner Photovoltaikelemente verdeckt liegend in dem Montageprofil geführt werden.

Gemäß einer weiteren Ausgestaltung ist die Aufnahme durch eine Leiste teilweise verschließbar und ein Rand des Photovoltaikelementes ist an dem Montageprofil U-förmig eingefasst. Dadurch kann das Photovoltaikelement besonders stabil, beispielsweise kraft- und formschlüssig, festgelegt werden, da sowohl an der Unterseite als auch an der gegenüberliegenden Oberseite eine Verklebung an dem Montageprofil bzw. der Leiste erfolgen kann. Die Leiste kann auf einfache Weise an einem Halteelement an dem Montageelement verrastet werden, beispielsweise durch eine Klemmverbindung an einer Nut des Montageprofils.

Erfindungsgemäß wird auch eine Montageanordnung mit einem plattenförmigen Photovoltaikelement bereitgestellt, bei dem an mindestens einer Seite, vorzugsweise an gegenüberliegenden Seiten, ein Montageprofil montiert ist. Eine solche Montageanordnung lässt sich in optisch ansprechender Weise an Gebäuden einsetzen, beispielsweise als Lamelle eines Sonnenschutzes oder Vordach. Dabei können Photovoltaikelemente in großer Länge und Breite an den Montageprofilen gehalten werden.

Vorzugsweise ist das Photovoltaikelement an dem Montageprofil verklebt, wobei die Klebestellen von außen nicht sichtbar angeordnet sind.

Für eine stabile Abstützung ist das Montageprofil bzw. sind die Montageprofile durch jeweils ein am Bauwerk festgelegtes Schwert fixiert. Für eine Ausrichtung des jeweiligen Montageprofils ist das Schwert vorzugsweise höhenverstellbar an einem Sockel gehalten und/oder verschwenkbar an einem Sockel gelagert. Dadurch kann die gewünschte Neigung und Höhe zur Positionierung des Photovoltaikelementes justiert werden.

Vorzugsweise weist die Montageanordnung ein Photovoltaikeferraent auf, das zwischen zwei Montageprofilen eingefasst ist, die endseitig jeweils an einem Halter festgelegt sind. Die Einheit aus Photovoltaikelement und den beiden Montageprofilen eine Lamelle eines Lamellenvorhanges einer Sonnenschutzvorrichtung ausbilden. Jede Lamelle kann dann über einen Schwenkmechanismus an dem Halter gedreht werden, um eine gewünschte Verschattung, beispielsweise an einem Gebäude zu erhalten.

Um auch mehrere Photovoltaikelemente nebeneinander mit einem Montageprofil montieren zu können, weist das Montageprofil vorzugsweise zwei Aufnahmen auf, die jeweils zur Aufnahme eines Randes eines Photovoltaikelementes dienen. Auf diese Weise lässt sich eine Montageanordnung mit wenigen Bauteilen in großer Länge und Breite herstellen, beispielsweise um ein Vordach an einem Gebäude auszubilden.

Die Erfindung wird nachfolgend anhand mehrerer Ausführungsbeispiele mit Bezug auf die beigefügten Zeichnungen näher erläutert. Es zeigen:

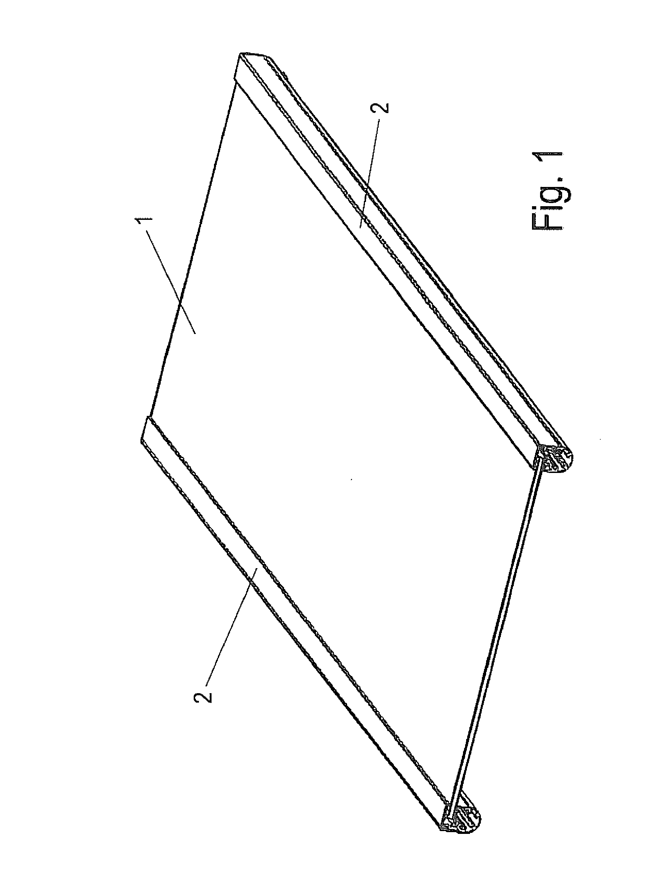

- Figur 1: eine perspektivische Ansicht einer erfindungsgemäßen Montageanordnung;
- Figur 2: eine Vorderansicht der Montageanordnung der Figur 1;
- Figur 3: eine geschnittene Detailansicht eines Montageprofils in montiertem Zustand;
- Figur 4: eine geschnittene Explosionsdarstellung des Montageprofils der Figur 3;
- Figur 5: eine Ansicht eines Montageprofils in einer modifizierten Positionierung;
- Figur 6: ein modifiziertes Ausführungsbeispiel eines Montageprofils;
- Figur 7: eine weitere Ausführungsform eines Montageprofils;
- Figur 8: eine weitere Ausführungsform eines Montageprofils;
- Figuren 9 und 10: zwei Ansichten von Abdeckkappen für ein Montageprofil;
- Figur 11: eine Seitenansicht eines weiteren Ausführungsbeispiels einer erfindungsgemäßen Montageanordnung;
- Figur 12: eine perspektivische Ansicht der Montageanordnung der Figur 11;
- Figuren 13 und 14: zwei Ansichten eines Schwertes zur Fixierung einer Montageanordnung;
- Figuren 15 und 16: zwei Ansichten eines weiteren Ausführungsbeispiels eines Schwertes zur Fixierung einer Montageanordnung;
- Figur 17: eine weitere Ausgestaltung eines Schwertes zur Fixierung einer Montageanordnung, und
- Figuren 18 und 19: zwei Ansichten eines weiteren Schwertes zur Fixierung einer erfindungsgemäßen Montageanordnung.

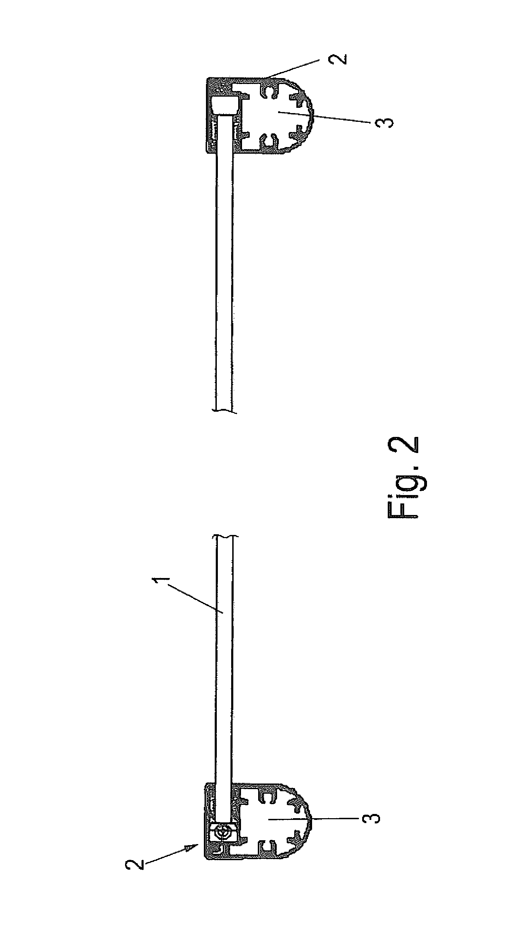

Ein plattenförmiges Photovoltaikelement 1 ist an gegenüberliegenden Seiten jeweils an einem Montageprofil 2 festgelegt. Die Montageprofile 2 können aus Kunststoff oder Metall, insbesondere als extrudierte Aluminiumprofile, ausgebildet sein. Wie in Figur 2 erkennbar ist, sind die Ränder des Photovoltaikelementes 1 in einer U-förmigen Aufnahme an dem Montageprofil 2 eingefügt.

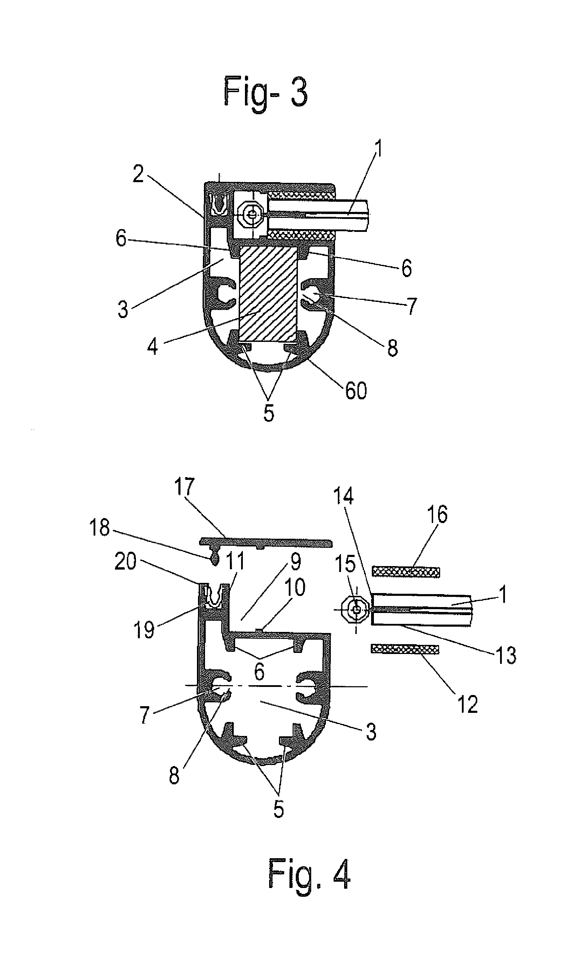

Ein Montageprofil 2 ist im Detail in den Figuren 3 und 4 dargestellt. Das Montageprofil 2 umfasst eine Hohlkammer 3, in der eine Armierung 4 mit rechteckigem Querschnitt eingefügt ist. Die Armierung 4 ist dabei über untere Stege 5 und obere Stege 6 exakt innerhalb der Hohlkammer 3 positioniert, wobei die Stege 5 und 6 einen Eckbereich der Armierung 4 umgreifen. Die Armierung 4 besteht aus einem stabilen Material, beispielsweise aus Edelstahl, und dient zur Verstärkung des dünnwandigen Montageprofils 2. Die Stege 5 und 6 ermöglichen die Aufnahme einer Kante eines handelsüblichen Halbzeuges in Form der Armierung 4. Ein zum Photovoltaikelement 1 gegenüberliegender Wandabschnitt 60 des Montageprofils 2 ist dabei gerundet ausgebildet, beispielsweise im Querschnitt halbkreisförmig, wobei auch andere Profilgeometrien möglich sind. Der Wandabschnitt 60 kann unabhängig von der Außenkontur der Armierung 4 ausgebildet sein, da die Stege 5 eine winkelförmige Aufnahme besitzen, in die eine Kante der Armierung 4 eingefügt ist. Statt einer gerundeten Kontur des Wandabschnittes 60 kann beispielsweise auch ein ebener Wandabschnitt vorgesehen sein, der zur Ebene des Photovoltaikelementes 1 geneigt angeordnet ist.

An gegenüberliegenden Seiten des Montageprofils 2 ist ein Schraubkanal 7 ausgebildet, der in die Hohlkammer 3 hineinragt und durch Stege gebildet ist, die auf der zur Außenwand des Montageprofils 2 gegenüberliegenden Seite einen offenen Längsschlitz 8 aufweisen. Im Bereich des Längsschlitzes 8 kann an der Außenwand des Montageprofils 2 eine Markierung, beispielsweise durch eine Profilierung oder andere Kennzeichnung, vorgesehen sein. Der Schraubkanal 7 ist dadurch so ausgebildet, dass Befestigungsmittel, wie Schrauben, sowohl in Längsrichtung des Montageprofils 2 an den Stirnseiten montiert werden können, aber auch in eine Richtung senkrecht zur Längsrichtung. Hierfür werden im Bereich der äußeren Markierungen Befestigungsmittel im Wesentlichen senkrecht zur Außenwand eingedreht und durchgreifen dann den Längsschlitz 8 an dem Schraubkanal 7.

An dem Montageprofil 2 ist ferner eine winkelförmige Aufnahme 9 ausgebildet, die eine Unterseite 13 an dem Rand des Photovoltaikelementesl abstützt. Ferner ist an der winkelförmigen Aufnahme 9 ein Vorsprung 11 ausgebildet, der etwa die gleich Höhe besitzt wie eine Stirnseite 14 des Photovoltaikelementes 1. Das Photovoltaikelement 1 ist im Randbereich 13 an der Unterseite durch einen Klebestreifen 12 an der Unterseite 10 der Aufnahme 9 fixiert. An der Stirnseite 14 des Photovoltaikelementes 1 ist ein Kabelkanal mit einem Kabel 15 angeordnet, das zwischen dem Photovoltaikelement 1 und dem Vorsprung 11 positioniert ist.

Um das Photovoltaikelement 1 zusätzlich formschlüssig an dem Montageprofil 2 zu fixieren, ist ferner eine Leiste 17 vorgesehen, die an einem Klemmstück 19 in einer Nut 20 an dem Montageprofil 2 verrastet werden kann. Hierfür ist an der Leiste 17 ein Rastvorsprung 18 angeformt, der klemmend an dem Klemmstück 19 festgelegt werden kann. Die Leiste 17 übergreift einen oberen Rand des Photovoltaikelementes 1 und ist über einen Klebestreifen 16 fest mit dem Photovoltaikelement 1 verbunden. Dadurch ist das Photovoltaikelement 1 in der montierten Position an der Aufnahme 9 U-förmig eingefasst.

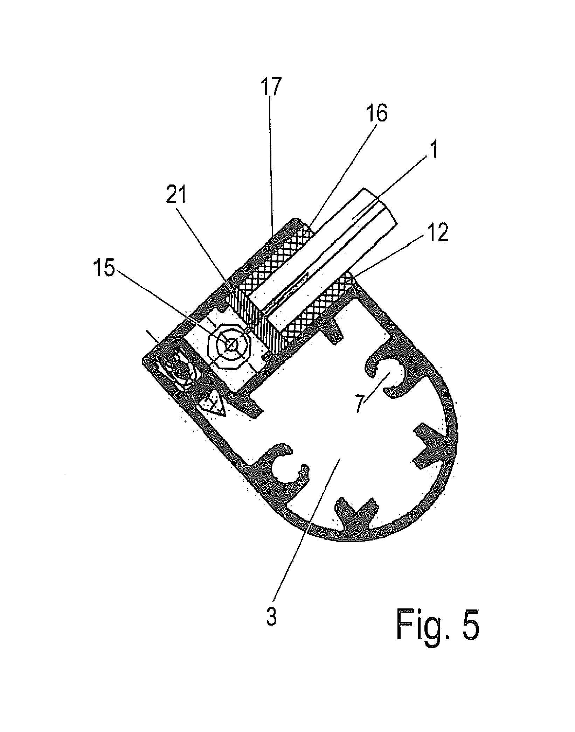

In Figur 5 ist das Photovoltaikelement 1 in einer zur Horizontalen geneigten Position angeordnet. Um die Gewichtslasten besser an das Montageprofil 2 abgeben zu können, ist zusätzlich eine Halteleiste 21 an der Stirnseite 14 des Photovoltaikelementes 1 angeordnet. Zwischen der Halteleiste 21 und der Leiste 17 ist eine Kabelkanal mit dem Kabel 15 ausgebildet.

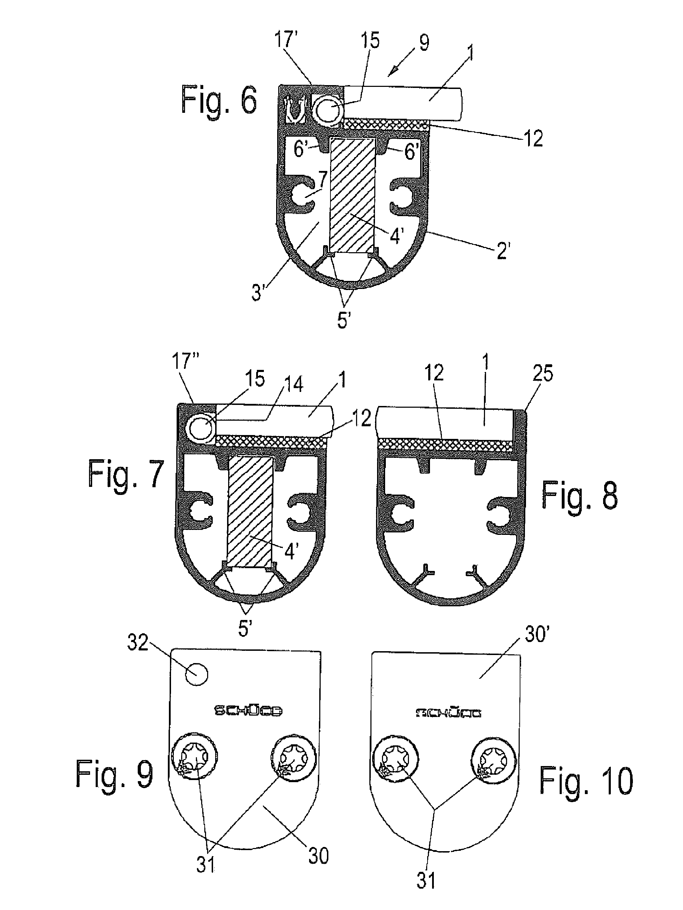

In Figur 6 ist eine leicht modifizierte Ausgestaltung eines Montageprofils 2' gezeigt, bei dem eine etwas schmalere Armierung 4' in der Hohlkammer 3' angeordnet ist, wobei die Armierung durch Stege 5' und 6' positioniert ist. An der Aufnahme 9 ist ein Rand eines Photovoltaikelementes 1 eingefügt und über einen Klebestreifen 12 an dem Mantageprofil 2' fixiert. Ferner ist an der Stirnseite ein Kabelkanal ausgebildet, in dem ein Kabel 15 angeordnet ist, das durch eine Leiste 17' verdeckt liegend angeordnet ist. Die Leiste 17' ist allerdings kürzer ausgebildet und übergreift das Photovoltaikelement 1 nicht, so dass der Wirkungsgrad durch die größere sichtbare Oberfläche des Photovoltaikelementes 1 erhöht ist. Die Leiste 17' ist wieder über ein Klemmstück 19 an einer Nut 20 festgelegt.

In Figur 7 ist eine weitere Ausführungsform eines Montageprofils gezeigt, bei dem eine Leiste 17" noch kürzer ausgebildet ist und nur eine Nut zum Einfassen eines Kabels 15 ausbildet. Die Leiste 17" ist integral mit dem Montageprofil ausgebildet und liegt an einer Stirnseite 14 des Photovoltaikelementes 1 an, das über einen Klebestreifen 12 an dem Montageprofil verklebt ist. Der Kabelkanal für das Kabel 15 ist nur an einer Seite einer Montageanordnung ausgebildet, so dass in Figur 8 ein Montageprofil an der gegenüberliegenden Seite dargestellt ist, bei dem kein zusätzlicher Kabelkanal ausgebildet ist. Das Photovoltaikelement 1 liegt an einer Aufnahme des Montageprofils an und ist über einen Klebestreifen 12 an der Unterseite verklebt. An der Stirnseite liegt das Photovoltaikelement 1 an einem hervorstehenden Steg 25 an, wobei auch an der Stirnseite eine Verklebung oder ein Abstandshalter vorgesehen sein kann.

In den Figuren 9 und 10 sind Abdeckkappen 30 und 30' dargestellt, die an den Stirnseiten der Montageprofile 2 und 2' montiert werden können. Die Abdeckkappen 30 sind über Schrauben 31 fixiert, die in die Schraubkanäle 7 eingedreht werden. An der Abdeckkappe 30 ist eine Öffnung 32 für die Kabeldurchführung ausgebildet, die bei der Abdeckkappe 30' fehlt.

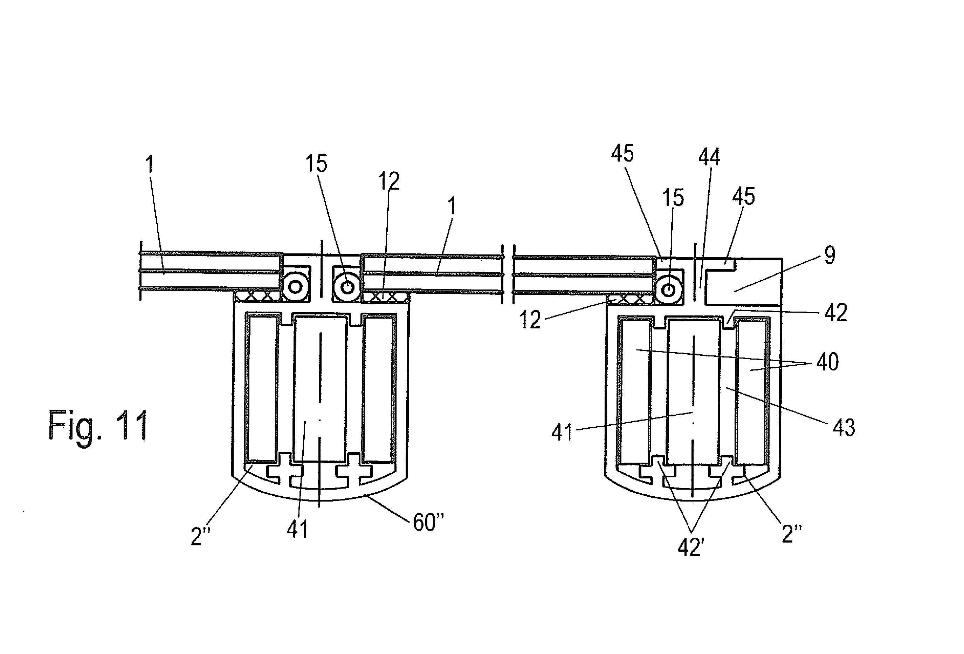

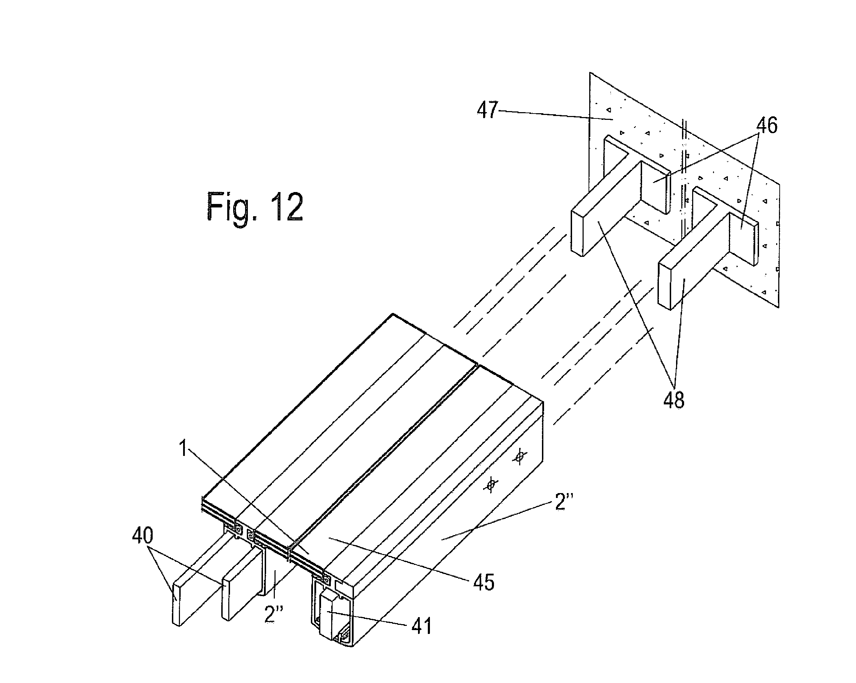

In den Figuren 11 und 12 ist ein weiteres Ausführungsbeispiel einer Montageanordnung mit zwei Montageprofilen 2" gezeigt, die mehrere plattenförmige Photovoltaikelemente 1 befestigen. Die Montageprofile 2" weisen statt einer im Wesentlichen halbkreisförmigen Außenkontur eher quadratische Außenkontur mit abgerundeter Unterseite auf. An der Oberseite steht ein Steg 44 mit seitlichen Vorsprüngen 45 hervor. Der Steg 44 bildet eine winkelförmige Aufnahme 9 aus, wobei die seitlichen Vorsprünge 45 an einer Stirnseite des Photovoltaikelementes 1 anliegen, während an einer Unterseite die Photovoltaikelemente 1 über einen Klebestreifen 12 an der Aufnahme 9 verklebt sind. Durch die T-förmige Gestaltung des Steges 44 ist zwischen dem Photovoltaikelement 1 und dem Mittelsteg 44 eine Aufnahme für ein Kabel 15 ausgebildet.

Das Montageprofil 2" ist als Hohlprofil ausgebildet, wobei drei rechteckförmige Hohlkammern gebildet sind, die durch Stege 42 und 42' unterteilt sind, wobei die Stege 42 sich nur geringfügig in die Hohlkammer erstrecken. Die Stege 42' sind kreuzförmig ausgebildet, so dass an gegenüberliegenden Seiten eine winkelförmige Aufnahme für die Kante einer Armierung oder eines Verbindungselementes ausgebildet ist. In zwei äußere Hohlkammern ist jeweils eine Armierung 40 in Form eines Metallprofiles eingefügt, das ein Durchbiegen des Montageprofils 2" vermindert. In dem mittleren Abschnitt der Hohlkammer ist ein Schwert 41 eingefügt, das beispielsweise zur Festlegung des Montageprofils 2" an einem Gebäude dient.

In Figur 12 ist eine mögliche Befestigung der Montageanordnung mit den Montageprofilen 2" gezeigt. Die Montageprofile 2' werden auf Schwerter 48 aufgeschoben, die über einen Sockel 46 an einem Bauwerk 47, beispielsweise einer Außenwand eins Gebäudes, festgelegt sind. Durch die Schwerter 48 werden die Montageprofile 2" endseitig festgelegt und können freitragend montiert werden. Die Montageanordnung kann allerdings statt als Vordach auch als Lamellenanordnung ausgebildet sein, beispielsweise als Sonnenschutzvorrichtung vor einem Gebäude, wobei die Lamellen auch drehbar gelagert sein können, beispielsweise an einem Lamellenvorhang.

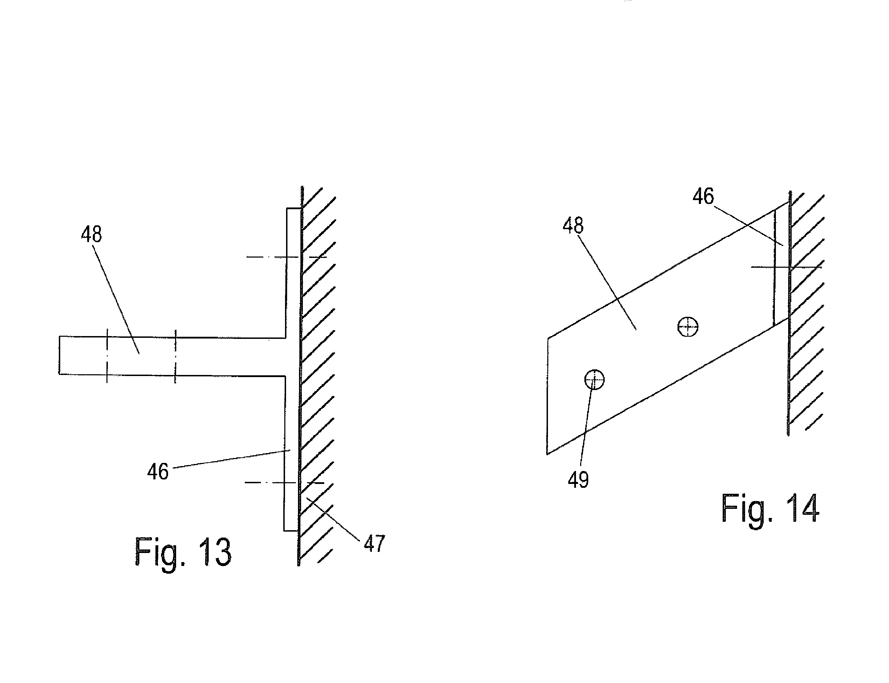

In den Figuren 13 und 14 ist das Schwert 48 dargestellt, das an dem Sockel 46 angeordnet ist, der an einer Wand 47 verschraubt ist. Das Schwert 48 ist geneigt zur Horizontalen angeordnet und umfasst Schraubkanäle 49 für Befestigungsmittel, die seitlich in die Montageprofile 2" eingefügt werden können. Das Schwert 48 lässt sich auf einfache Weise durch schräges Absägen eines T-Profils erhalten und leicht montieren.

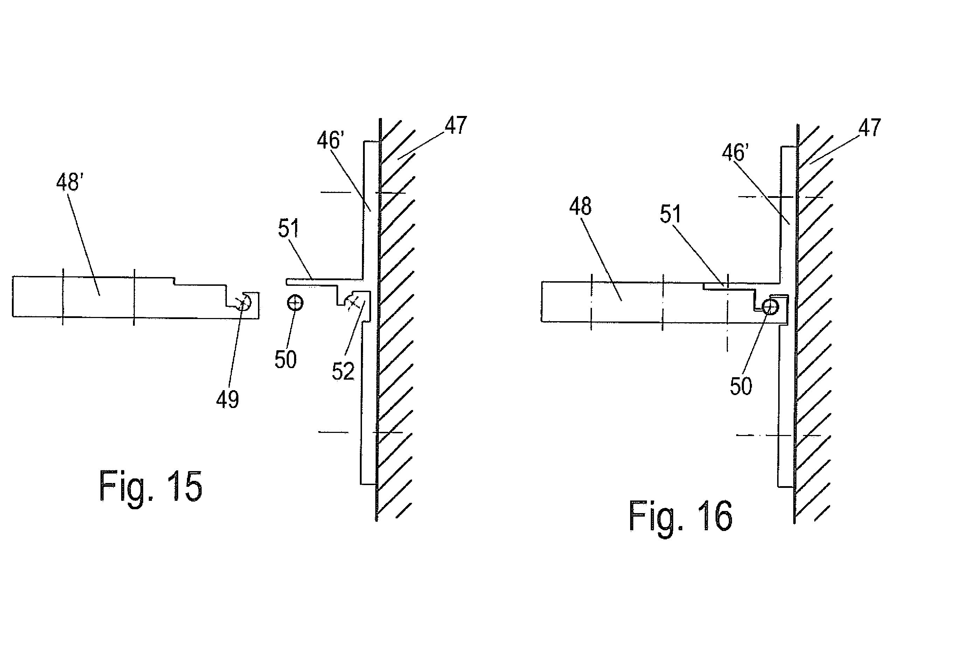

In den Figuren 15 und 16 ist ein Ausführungsbeispiel zur Befestigung einer Montageanordnung der Figur 11 dargestellt, wobei ein Schwert 48' verstellbar an einem Sockel 46' gelagert ist. Das Schwert 48' weist eine Aufnahme 49 auf, in die eine Achse 50 oder ein Befestigungsmittel in Form eines Gewindestiftes einfügbar ist. Benachbart zu der Aufnahme 49 ist eine Anschlagsfläche 52 ausgebildet, die beim Einfügen des Schwertes 48' in eine Halterung 52 an dem Halter 46' gegen einen Steg 51 anschlägt, wie dies in Figur 16 dargestellt ist. Dadurch kann das Schwert 48' getrennt von dem Sockel 46" montiert und dann in der gewünschten Position eingestellt bzw. fixiert werden.

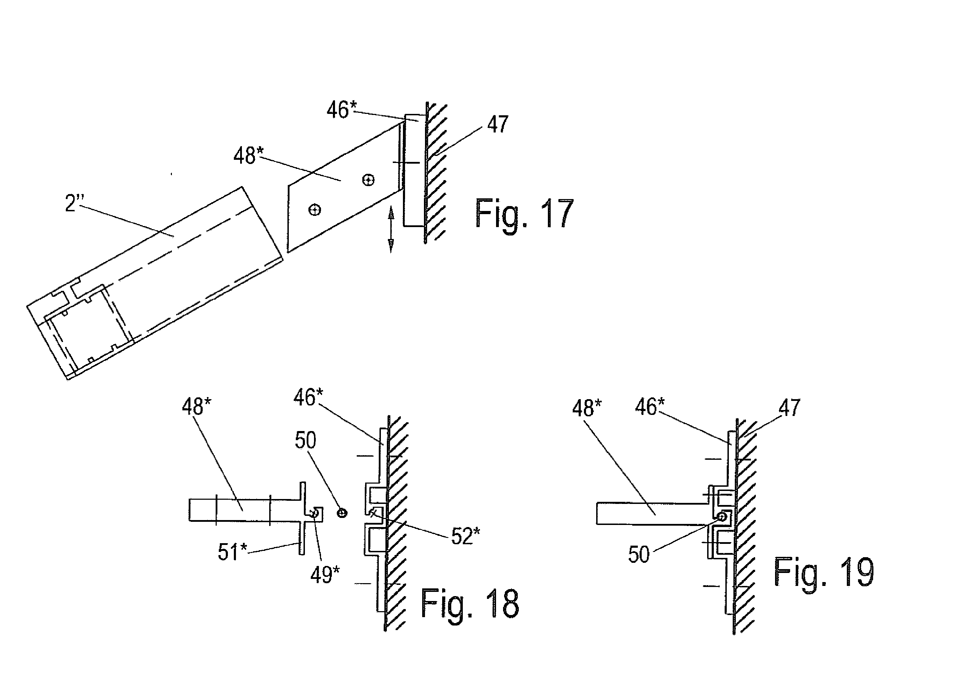

In Figur 17 ist eine Befestigung eines Montageprofils 2" an einem geneigt zur Horizontalen verlaufenden Schwert 48* dargestellt. Das Schwert 48* wird in die mittlere Hohlkammer entsprechend Figur 11 eingeschoben und ist an einem Sockel 46* festgelegt. Dabei ist das Schwert 48* höhenverstellbar an dem Sockel 46* gehalten und kann in der gewünschten Höhe an der Wand 47 fixiert werden.

In den Figuren 18 und 19 ist die Montage des Schwertes 48* der Fig. 17 gezeigt, das zur Montage eines Montageprofils 2" dient. Das Schwert 48* ist mit einem Vorsprung in eine Nut 52* an einem Sockel 46* einfügbar. An dem Vorsprung ist eine Aufnahme 49* für eine Achse 50 ausgebildet, wobei an dem Schwert 48* seitlich hervorstehende Stege 51* ausgebildet sind, die an dem Sockel 46* verschraubt werden können. Dadurch wird eine besonders stabile Abstützung des Schwertes 48* erhalten.

## Patentansprüche

1. Montageprofil (2, 2') für Photovoltaikelemente (1), mit einer Hohlkammer (3), in die mindestens eine Armierung (4) oder ein Verbindungselement (41, 48) einfügbar ist und eine außerhalb der Hohlkammer (3) angeordneten Aufnahme (9), für den Rand eines plattenförmigen Photovoltaikelementes (1), wobei die Aufnahme (9) winkelförmig ausgebildet ist und eine Abstützung (10, 11) an einer Unterseite des Photovoltaikelementes (1) ausbildet, **dadurch gekennzeichnet, dass** in der Hohlkammer (3) nach innen hervorstehende Stege (5, 6, 42, 42') zur Lagefixierung der Armierung (4) ausgebildet sind und das Montageprofil (2, 2') auf der zum Photovoltaikelement (1) abgewandten Seite einen gerundeten und/ oder zur Ebene des Photovoltaikelementes (1) geneigt angeordneten Wandabschnitt (60) aufweist.

2. Montageprofil nach Anspruch 1, **dadurch gekennzeichnet, dass** die Stege (5, 6, 42') zur Lagefixierung einer Kante der Armierung (4) eine winkelförmige Aufnahme aufweisen.

3. Montageprofil nach Anspruch 1 oder 2, **dadurch gekennzeichnet, dass** in der Hohlkammer (3) mindestens ein in Längsrichtung des Montageprofils (2) verlaufender Schraubkanal (7) ausgebildet ist.

4. Montageprofil nach Anspruch 3, **dadurch gekennzeichnet, dass** der Schraubkanal (7) auf der gegenüber zur Seitenwand liegenden Seite durch einen Längsschlitz (8) offen ausgebildet ist.

5. Montageprofil nach einem der Ansprüche 1 bis 4, **dadurch gekennzeichnet, dass** an dem Montageprofil ein Kabelkanal für die Aufnahme mindestens einer Leitung (15) ausgebildet ist.

6. Montageprofil nach einem der Ansprüche 1 bis 5, **dadurch gekennzeichnet, dass** die Aufnahme (9) durch eine Leiste (17) teilweise verschließbar ist und ein Rand des Photovoltaikelementes (1) U-förmig eingefasst ist.

7. Montageprofil nach Anspruch 6, **dadurch gekennzeichnet, dass** die Leiste (17) an einem Halteelement (19) an dem Montageprofil (2) verrastbar ist.

8. Montageanordnung mit einem plattenförmigen Photovoltaikelement (1), **dadurch gekennzeichnet, dass** das Photovoltaikelement (1) an mindestens einer Seite an einem Montageprofil (2, 2') nach einem der vorhergehenden Ansprüche montiert ist

9. Montageanordnung nach Anspruch 8, **dadurch gekennzeichnet, dass dass** Photovoltaikelement (1) an dem Montageprofil (2) verklebt ist.

10. Montageanordnung nach Anspruch 8 oder 9, **dadurch gekennzeichnet, dass** in das Montageprofil (2, 2') ein an einem Bauwerk festgelegtes Schwert (48) eingefügt ist.

11. Montageanordnung nach Anspruch 10,**dadurch gekennzeichnet, dass** das Schwert (48) höhenversteilbar und/oder verschwenkbar an einem Sockel gehalten ist.

12. Montageanordnung nach einem der Ansprüche 8 bis 11, **dadurch gekennzeichnet, dass** an einem Montageprofil (2') zwei Aufnahmen (9) ausgebildet sind, an denen jeweils ein Photovoltaikelement (1) festgelegt ist.

13. Montageanordnung nach einem der Ansprüche 8 bis 12, **dadurch gekennzeichnet, dass d**ie Montageanordnung ein Photovoltaikelement (1) aufweist, das zwischen zwei Montageprofilen (2, 2') eingefasst ist, die endseitig jeweils an einem Halter festgelegt sind.

14. Montageanordnung nach Anspruch 13, **dadurch gekennzeichnet, dass** die Einheit aus Photovoltaikelement (1) und den beiden Montageprofilen (2, 2') eine Lamelle eines Lamellenvorhanges einer Sonnenschutzvorrichtung ausbilden.

15. Montageanordnung nach einem der Ansprüche 8 bis 12, **dadurch gekennzeichnet, dass** die Montageanordnung als Vordach ausgebildet ist.
